Europäisches Patentamt

European Patent Office

Office européen des brevets

(19)

(11) Veröffentlichungsnummer: **0 249 068**
**B1**

(12) **EUROPÄISCHE PATENTSCHRIFT**

(45) Veröffentlichungstag der Patentschrift:
08.08.90

(21) Anmeldenummer: 87107355.7

(22) Anmeldetag: 20.05.87

(51) Int. Cl.⁵: **B01D 53/34,** B01D 53/14,
B01D 47/16

(54) **Verfahren und Vorrichtung zur Reinigung von schadstoffhaltigen Gasen.**

(30) Priorität: 02.06.86 DE 3618511

(43) Veröffentlichungstag der Anmeldung:
16.12.87 Patentblatt 87/51

(45) Bekanntmachung des Hinweises auf die Patenterteilung:
08.08.90 Patentblatt 90/32

(84) Benannte Vertragsstaaten:
AT BE CH DE ES FR GB GR IT LI NL SE

(56) Entgegenhaltungen:
DE-A- 3 040 006
DE-B- 1 017 597
DE-B- 1 099 500
DE-C- 3 344 875
US-A- 3 714 764

(73) Patentinhaber: **Stubinen Utveckling AB,
Liljeholmstorget 7, S-117 80 Stockholm(SE)**

(72) Erfinder: **Uddeholm, Helena, Manstorpsväg 11,
S-14600 Tullinge(SE)**
Erfinder: **Armand, Björn, Hägerstens Allé 10,
S-12655 Hägersten(SE)**
Erfinder: **Vikström, Pär, Träkvista Byg. 17,
S.17800 Ekerö(SE)**

(74) Vertreter: **Popp, Eugen, Dr. et al, MEISSNER, BOLTE &
PARTNER Widenmayerstrasse 48 Postfach 86 06 24,
D-8000 München 86(DE)**

## Beschreibung

Die Erfindung betrifft eine Vorrichtung zur Reinigung von schadstoffhaltigen Gasen, insbesondere Schwefeldioxid, Fluor, Chlor, Chloride, Schwefelwasserstoff, Ammoniak, Amine, Pyridin, Stickoxide und/oder Lösungsmitteldämpfe enthaltenden Gasen, insbesondere Luft, mit einer in der Strömung des zu reinigenden Gases rotierend angeordneten Spiralfläche, der im Bereich der Drehachse Absorptionsflüssigkeit zuführbar ist.

Eine derartige Vorrichtung ist aus der DE-B 1 099 500 bekannt.

Bei der bekannten Vorrichtung erfolgt die Einleitung des zu reinigenden und Ableitung des gereinigten Gases jeweils tangential zur drehangetriebenen Spiralfläche, die durch eine Vielzahl von sich zwischen einer inneren und äußeren Ringfläche erstreckenden, gleichmäßig über den Umfang verteilt angeordneten, jeweils spiralartig gebogenen Blechen definiert ist. Im Bereich der Drehachse, d. h. innerhalb der inneren Ringfläche, sind radial gerichtete Verteilerbrausen angeordnet, durch die den spiralartig gebogenen Blechen Absorptionsflüssigkeit zuführbar ist. Durch die beschriebene Art des Spiralflächen-Aufbaus und durch die beschriebene Art der Gasein- und -ableitung ist die bekannte Vorrichtung relativ raumintensiv gebaut. Des weiteren ist durch die tangentiale Einleitung des zu reinigenden Gases derart, daß dieses auf die spiralartig gebogenen Bleche radial außen auftrifft, eine optimale Gasreinigung nicht gewährleistet, da im radial äußeren Bereich der spiralartig gebogenen Bleche die Absorptionsflüssigkeit zumindest teilweise schon verbraucht ist. Schließlich ist bei der bekannten Vorrichtung auch der Druckabfall des durch die Vorrichtung hindurchgeführten Gases relativ hoch aufgrund der notwendigen Gasumlenkungen.

Ganz ähnlich verhält es sich bei der Vorrichtung nach der DE-B 1 017 597. Die dort beschriebene Vorrichtung unterscheidet sich von der Vorrichtung nach der DE-B 1 099 500 im wesentlichen nur dadurch, daß statt zentraler Verteilerdüsen eine Transportschnecke für die Zufuhr von Absorptionsflüssigkeit vorgesehen ist.

Der vorliegenden Erfindung liegt die Aufgabe zugrunde, eine Vorrichtung der eingangs genannten Art zu schaffen, die sich durch eine kompakte Bauweise bei vergleichsweise großer Absorptionsfläche auszeichnet, wobei gleichzeitig darauf geachtet werden soll, daß der Druckabfall des durch die Vorrichtung hindurchgeführten Gases minimal ist.

Diese Aufgabe wird durch die kennzeichnenden Merkmale des Patentanspruches 1 gelöst.

Durch die achsparallele Durchströmung der Spiralfläche läßt sich diese innerhalb eines rohrförmigen Gehäuses plazieren mit der Folge einer entsprechend kompakten und beliebig vergrößerbaren Bauweise, ohne daß wirksame Spiralfläche verlorengeht. Die achsparallele Durchströmung der Spiralfläche hat des weiteren den Vorteil eines hohen Konzentrationsgefälles zwischen Gas und Absorptionsflüssigkeit im Bereich des Gaseintritts. Schließlich ist der Druckabfall des durch die erfindungsgemäße Vorrichtung hindurchgeführten Gases minimal, da das zu reinigende Gas praktisch ohne Umlenkung durch die Vorrichtung strömen kann.

Durch die weitere Maßnahme, wonach die Drehachse durch einen Rohrabschnitt mit Öffnungen zum radialen Austritt der Absorptionsflüssigkeit gebildet ist, läßt sich die Absorptionsflüssigkeit sehr gezielt auf der Spiralfläche verteilen, d. h. praktisch verlustfrei. Durch die Drehbewegung der Spiralfläche wird die zugeführte Absorptionsfläche etwa gleichmäßig fortschreitend von radial innen nach radial außen verteilt. Die erfindungsgemäße Zufuhr der Absorptionsflüssigkeit erlaubt einen minimalen Verbrauch pro Zeiteinheit bei unverändert hohem Absorptionsvermögen bzw. Gasreinigungsgrad.

Vorteilhafte konstruktive Weiterbildungen der erfindungsgemäßen Vorrichtung sind in den Unteransprüchen beschrieben, wobei Anspruch 10 auf eine besonders vorteilhafte Verwendung der erfindungsgemäßen Vorrichtung hinweist.

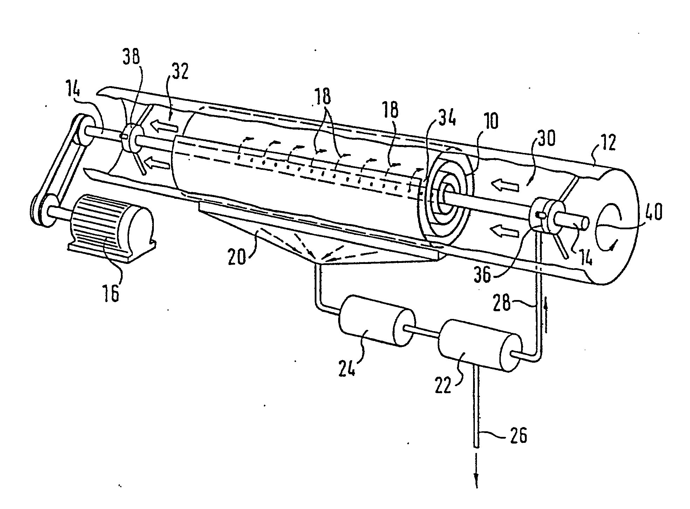

Nachstehend wird eine Ausführungsform der Erfindung anhand der beigefügten Zeichnung näher erläutert.

Die dargestellte Ausführungsform umfaßt eine durchgehende Spiralfläche 10, die innerhalb eines zylindrischen Kanals bzw. Gehäuses 12 an einer rotierend angetriebenen Drehachse 14 befestigt ist. Die Drehachse 14 wird durch einen Antriebsmotor, vorzugsweise Elektromotor, angetrieben, wobei die Drehzahl vorzugsweise veränderbar ist.

Die Drehachse 14 ist im Befestigungsbereich der Spiralfläche 10 mit radialen Öffnungen zum Austritt einer Absorptionsflüssigkeit versehen. Die Absorptionsflüssigkeit wird also zentral im Bereich der Drehachse 14 der Spiralfläche 10 zugeführt. Aufgrund der Rotationsbewegung (Pfeil 40) der Spiralfläche 10 wird die Absorptionsflüssigkeit etwa gleichmäßig und von innen nach außen fortschreitend auf der Spiralfläche 10 verteilt (Pfeile 18), so daß sich auf der Spiralfläche 10 ein dünner Absorptionsflüssigkeitsfilm ausbildet. Unterhalb der Spiralfläche 10, die durch ein durchgehend spiralförmig gebogenes Blechband definiert ist, ist eine Auffangwanne 20 angeordnet. Diese bildet bei der dargestellten Ausführungsform einen Teil des zylindrischen Gehäuses bzw. Kanals 12. Die Auffangwanne 20 bildet ein Sammelbecken für schadstoffangereicherte Absorptionsflüssigkeit, die von der rotierend angetriebenen Spiralfläche 10 abtropft.

Von der Auffangwanne 20 wird die schadstoffhaltige Absorptionsflüssigkeit zu einer Reinigungsvorrichtung 22 gepumpt, und zwar mittels einer Pumpe 24. Von der Reinigungsvorrichtung führt eine Leitung 26 zu einem Sammelgefäß für die abgesonderten Schadstoffe. Die in der Reinigungsvorrichtung 22 gereinigte Absorptionsflüssigkeit wird schließlich über eine Leitung 28 wieder zur hohl ausgebildeten Drehachse 14 zurückgeführt. Im Bereich der Spiralfläche 10 kann dann die gereinigte Absorptionsflüssigkeit wieder radial austreten und die Spiralfläche 10 fortschreitend von innen nach außen benetzen.

Das zu reinigende Gas strömt durch den Kanal bzw. das zylindrische Gehäuse 12 in Richtung der Drehachse 14 hindurch, und zwar in der anliegenden Zeichnung von rechts nach links. Im Bereich der mit Absorptionsflüssigkeit benetzten Spiralfläche 10 wird das Gas von Schadstoffen gereinigt, wobei die Art der verwendeten Absorptionsflüssigkeit von den zu absorbierenden Schadstoffen abhängt.

Durch Variation der Umwälzung der Absorptionsflüssigkeit (Geschwindigkeit des Absorptionsflüssigkeits-Kreislaufes), der Steigung der Spiralfläche 10 sowie deren Rotationsgeschwindigkeit kann der Reinigungsgrad optimal an den Grad der Verunreinigung angepaßt werden.

An der Gas-Eintrittsseite 30 kann noch ein "Absorptionsflüssigkeits-Vorhang" vorgesehen sein. Zu diesem Zweck ist dort eine Absorptions-Sprühvorrichtung vorgesehen.

Dadurch wird eine zusätzliche Gasreinigung erzielt.

Das gleiche könnte man an der Gasaustrittsseite 32 der beschriebenen Vorrichtung vorsehen.

Es können auch mehrere ineinander angeordnete Spiralflächen 10 vorgesehen sein, denen jeweils radiale Austrittsöffnungen der zentralen Drehachse 14 zugeordnet sind.

Um den Abstand der Spiralwindungen voneinander zu gewährleisten, können zwischen diesen Abstandshalter angeordnet sein, vorzugsweise gleichmäßig über den Umfang und die Länge der Spiralfläche 10 verteilt oder in Form von sich in Spiralrichtung erstreckenden Schraubenfedern bzw. -wendeln.

Eine andere oder auch zusätzliche Möglichkeit, den Abstand der einzelnen Spiralwindungen voneinander zu halten, besteht darin, daß man das Spiralblech mit stabilitätserhöhenden Verformungen, wie Wölbungen oder dgl., versieht.

Der Drehantrieb der Spiralfläche 10 erfolgt über die drehangetriebene Rotationsachse 14, auf die der Motor 16 einwirkt. Es ist jedoch auch denkbar, die Spiralfläche 10 mit Leitschaufeln zu versehen bzw. mit einer Art Propeller zu koppeln derart, daß die Rotation der Spiralfläche 10 durch die Strömung des zu reinigenden Gases bewirkt wird.

Wie bereits eingangs dargelegt, kann die Spiralfläche mit Perforationen, Schlitzen oder dgl. versehen sein, durch die hindurch Absorptionsflüssigkeit quer zur Gasströmung abtropft. Dadurch wird zusätzliche Kontaktfläche bzw. Absorptionsfläche geschaffen. Des weiteren wird eine schnellere Verteilung der Absorptionsflüssigkeit von innen nach außen erreicht. Schließlich wird durch auf einen darunter liegenden Flüssigkeitsfilm auftreffende Flüssigkeitstropfen dieser aufgerührt, wodurch eine bessere Konvektion erreicht wird.

Der Druckabfall des durch die beschriebene Vorrichtung hindurchgeführten Gases ist minimal, da das zu reinigende Gas praktisch ohne Umlenkung durch die Vorrichtung hindurchgeführt werden kann.

Die radialen Öffnungen der hohlen Drehachse 14 im Bereich der Spiralfläche 10 sind so angeordnet, daß die austretende Absorptionsflüssigkeit an die radial innen gelegene Seite der Spiralfläche 10 gelangt und sich längs dieser radial nach außen ausbreitet unter Ausbildung eines dünnen Absorptionsflüssigkeitsiilms. Dieser wandert an der Innenseite der Spiralfläche 10 von innen nach außen. An der peripheren Öffnung 34 der Spiralfläche 10 wird die Absorptionsflüssigkeit abgeschleudert und in der Auffangwanne 20 gesammelt. Von dort gelangt die nunmehr schadstoffhaltige Absorptionsflüssigkeit in der oben beschriebenen Weise zu der Reinigungseinrichtung 22.

ürundsätzlich ist es auch denkbar, statt der beschriebenen Spiralfläche 10 mehrere, sich radial erstreckende Blechstreifen vorzusehen derart, daß ihnen jeweils Austrittsöffnungen der Drehachse 14 zugeordnet sind. Die sternartig angeordneten Blechstreifen können eben oder in oder gegen die Rotationsrichtung gewölbt ausgebildet sein. Es hat sich jedoch gezeigt, daß der beste Wirkungsgrad mit einer oder mehreren Spiralflächen 10 der oben beschriebenen Art erzielbar ist.

Die Spiralfläche kann auch stehend angeordnet sein.

## Patentansprüche

1. Vorrichtung zur Reinigung von schadstoffhaltigen Gasen, insbesondere Schwefeldioxid, Fluor, Chlor, Chloride, Schwefelwasserstoff, Ammoniak, Amine, Pyridin, Stickoxide und/oder Lösungsmitteldämpfe enthaltenden Gasen, insbesondere Luft, mit einer in der Strömung des zu reinigenden Gases rotierend angeordneten Spiralfläche (10), der im Bereich der Drehachse (14) Absorptionsflüssigkeit zuführbar ist, dadurch gekennzeichnet, daß das Gas die Spiralfläche (10) achsparallel durchströmt, und die Drehachse (14) durch einen Rohrabschnitt mit Öffnungen zum radialen Austritt der Absorptionsflüssigkeit gebildet ist.

2. Vorrichtung nach Anspruch 1, dadurch gekennzeichnet, daß die Spiralfläche (10) innerhalb eines rohrförmigen Gehäuses (12) gelagert (Lager 36, 38) ist.

3. Vorrichtung nach Anspruch 1 oder 2, dadurch gekennzeichnet, daß die Spiralfläche (10) entgegen ihrer Spiralwindung drehangetrieben ist.

4. Vorrichtung nach einem der Ansprüche 1 bis 3, dadurch gekennzeichnet, daß die Spiralfläche (10) Durchbrechungen, insbesondere durchgehende Löcher, aufweist.

5. Vorrichtung nach einem der Ansprüche 1 bis 4, dadurch gekennzeichnet, daß unterhalb der Spiralfläche (10) eine Auffangwanne (20) für Absorptionsflüssigkeit angeordnet ist, von der eine Fluidleitung zu einer Pumpe (24) und von dort über eine Reinigungseinrichtung (22) zur Drehachse (14) zurückführt.

6. Vorrichtung nach einem der Ansprüche 1 bis 5, dadurch gekennzeichnet, daß die Drehachse (14) mit einem Antrieb (16) mit veränderlicher Drehzahl gekoppelt ist.

7. Vorrichtung nach einem der Ansprüche 1 bis 6, dadurch gekennzeichnet, daß die Spiralfläche (10) durch ein spiralförmig um die Drehachse (14) herumgebogenes Blechband definiert ist, wobei die Spiralwindungen durch etwa gleichmäßig über den Umfang und die Länge verteilt angeordnete Abstandshalter oder dazwischen angeordnete Federelemente, insbesondere sich in Spiralrichtung erstreckende Schraubenfedern, im Abstand voneinander gehalten sind.

8. Vorrichtung nach Anspruch 7, dadurch gekennzeichnet, daß das spiralförmig gebogene Blechband mit stabilitätserhöhenden sowie gegebenenfalls abstandhaltenden Verformungen, insbesondere lokalen Wölbungen, versehen ist.

9. Vorrichtung nach einem der Ansprüche , bis 8, dadurch gekennzeichnet, daß die Spiralfläche (10) in axialer Richtung in zwei oder mehr Spiralflächen-Abschnitte unterteilt ist.

10. Verwendung der Vorrichtung nach einem der Ansprüche 1 bis 9, dadurch gekennzeichnet, daß als Absorptionsflüssigkeit Wasser für in Wasser lösliche Schadstoffe oder Silikonöl für in Wasser nicht-lösliche Elemente oder Toluen, oder Gemische davon, dienen.

## Claims

1. Device for the purification of pollutant-containing gases, in particular sulphurdioxide, fluorine, chlorine, chloride, hydrogen sulphide, ammonia, amine, pyridine, nitrogen oxide and/or gases containing solvent vapours, particularly air, with a rotating spiral surface (10) arranged in the flow of the gas to be purified, to which, in the region of the rotating axle (14), absorption liquid can be supplied, characterized in that the gas flows through the spiral surface (10) parallel to the axis, and the rotating axle (14) is formed by a tubular section with openings for the radial outlet of the absorption liquid.

2. Device according to Claim 1, characterized in that the spiral surface (10) is mounted within a tubular housing (12) (bearings 36, 38).

3. Device according to Claim 1 or 2, characterized in that the spiral surface (10) is rotary-driven counter to its spiral winding.

4. Device according to one of Claims 1 to 3, characterized in that the spiral surface (10) has openings, in particular throughholes.

5. Device according to one of Claims 1 to 4, characterized in that underneath the spiral surface (10) a receiving tank (20) is arranged for absorption liquid from which a liquid pipe leads back to a pump (24) and from there via a purification device (22) to the rotating axle (14).

6. Device according to one of Claims 1 to 5, characterized in that the rotating axle (14) is coupled with a drive (16) with variable speed.

7. Device according to one of Claims 1 to 6, characterized in that the spiral surface (10) is defined by a spiral-shaped sheet-metal band curved around the rotating axle (14), the spiral windings being held apart by spacers, arranged more or less evenly over the circumference and the length, or intermediate spring elements, in particular coil springs extending in direction of spiral.

8. Device according to Claim 7, characterized in that the spiral-shaped curved sheet-metal band is provided with stability-increasing and, if need be, spacing profiling, in particular local swellings.

9. Device according to one of Claims 1 to 8, characterized in that the spiral surface (10) is divided in axial direction into two or more spiral surface sections.

10. Use of the device according to one of Claims 1 to 9, characterized in that, as absorption liquid, water serves for water-soluble pollutants or silicone oil for water-insoluble elements or toluene or mixtures thereof.

## Revendications

1. Dispositif pour la purification de gaz pollués, en particulier de gaz, notamment d'air, contenant de l'anhydride sulfureux, du fluor, du chlore, des chlorures, du sulfure d'hydrogène, de l'ammoniac, des amines, de la pyridine, des oxydes d'azote et/ou des vapeurs de solvants, comprenant une surface en spirale (10) disposée de façon rotative dans le courant du gaz à purifier, à laquelle un liquide d'absorption peut être amené dans la région de l'axe de rotation (14), caractérisé en ce que le gaz traverse la surface en spirale (10) parallèlement à l'axe et que l'axe de rotation (14) est constitué par une section de tube présentant des ouvertures pour la sortie radiale du liquide d'absorption.

2. Dispositif selon la revendication 1, caractérisé en ce que la surface en spirale (10) est montée (paliers 36, 38) à l'intérieur d'une enveloppe tubulaire.

3. Dispositif selon l'une des revendications 1 et 2, caractérisé en ce que la surface en spirale (10) est entraînée en rotation en sens contraire de son enroulement en spirale.

4. Dispositif selon l'une des revendications 1 à 3, caractérisé en ce que la surface en spirale (10) présente des découpes, en particulier des trous traversants.

5. Dispositif selon l'une des revendications 1 à 4, caractérisé en ce qu'au-dessous de la surface en spirale (10) est disposée une cuve collectrice (20) pour le liquide d'absorption, à partir de laquelle une conduite de fluide ramène à une pompe (24) et de là, par l'intermédiaire d'un agencement de purification (22), à l'axe de rotation (14).

6. Dispositif selon l'une des revendications 1 à 5, caractérisé en ce que l'axe de rotation (14) est couplé à un moteur (16) à vitesse de rotation variable.

7. Dispositif selon l'une des revendications 1 à 6, caractérisé en ce que la surface en spirale (10) est définie par une bande de tôle recourbée en forme de spirale autour de l'axe de rotation (14), les spires de la spirale étant maintenues à distance les unes des autres par des entretoises réparties à peu près uniformément sur la circonférence et sur la longueur, ou par des éléments élastiques, en particulier des ressorts hélicoïdaux s'étendant dans la direction de la spirale, disposés entre elles.

8. Dispositif selon la revendication 7, caractérisé en ce que la bande de tôle courbée en forme de spirale est munie de déformations améliorant la stabilité et le cas échéant maintenant l'écartement, en particulier de bombements locaux.

9. Dispositif selon l'une des revendications 1 à 8, caractérisé en ce que la surface en spirale (10) est divisée en direction axiale en deux sections de surfaces en spirale ou plus.

10. Utilisation du dispositif selon l'une des revendications 1 à 9, caractérisée en ce qu'on utilise comme liquide d'absorption de l'eau pour des polluants solubles dans l'eau ou de l'huile de silicone pour des éléments non solubles dans l'eau ou du toluène, ou des mélanges de ceux-ci.